# EUROPEAN PATENT SPECIFICATION

(11) **EP 3 255 105 B1**
(45) Date of publication and mention of the grant of the patent: **01.06.2022**
(21) Application number: 16746456.9
(22) Date of filing: 26.01.2016
(51) Int. Cl.: C08L 69/00, C08K 5/52, C08L 71/02, G02B 6/00

(54) **AROMATIC POLYCARBONATE RESIN COMPOSITION AND MOLDED ARTICLE OF SAME**
AROMATISCHE POLYCARBONATHARZZUSAMMENSETZUNG UND FORMARTIKEL DAMIT
COMPOSITION DE RÉSINE POLYCARBONATE AROMATIQUE ET ARTICLE MOULÉ À BASE DE CELLE-CI

(30) Priority: 03.02.2015 JP 2015019437; 11.06.2015 JP 2015118442; 06.11.2015 JP 2015218550; 06.11.2015 JP 2015218551
(43) Date of publication of application: 13.12.2017
(73) Proprietor: Mitsubishi Engineering-Plastics Corporation, Tokyo 105-0021 (JP)
(72) Inventor: EGAWA, Makoto, Hiratsuka-shi Kanagawa 254-0016 (JP)
(74) Representative: Hoffmann Eitle
(86) International application number: PCT/JP2016/052117
(87) International publication number: WO 2016/125625

(56) References cited:
- EP-A1- 2 799 200
- EP-A1- 3 070 126
- WO-A1-2011/083635
- WO-A1-2013/088796
- JP-A- 2004 051 700
- JP-A- 2010 138 263
- JP-A- 2013 139 097
- JP-A- 2013 231 899
- JP-B2- 5 613 178
- US-A1- 2014 350 148
- DATABASE CA [Online] CHEMICAL ABSTRACTS SERVICE, COLUMBUS, OHIO, US; MATSUMOTO, SUSUMU: "Polycarbonate compositions with good electric, mechanical, and thermal properties and high weather resistance for light-guide sheets", XP002784113, retrieved from STN Database accession no. 159:726431 -& JP 2013 231899 A (MITSUBISHI ENGINEERING-PLASTIC CORPORATION, JAPAN) 14 November 2013 (2013-11-14)

## Description

### Technical Field

The present invention relates to an aromatic polycarbonate resin composition and a molded article thereof. More particularly, the present invention relates to an aromatic polycarbonate resin composition which has excellent hue and is suited as a material for molding a light guide member, and to an article obtained by molding the aromatic polycarbonate resin composition.

### Background Art

In Europe, North America, etc., automobiles are recently increasingly equipped with daytime running lamps on the head and rear lamps of the automobiles which constantly emit light to improve visibility by pedestrians and oncoming vehicles during daytime. Such daytime running lamps generally include a light guide member and a light source which emits light into the light guide member. Incandescent lamps such as halogen lamps are generally installed as usual nighttime light sources near the automobile daytime running lamps. Consequently, the light guide members are heated by not only heat from the light sources of the daytime running lamps but also by heat generated by the incandescent lamps. Because of this, the light guide members require excellent heat resistant durability.

Patent Literature 1 discloses, as a material for light guide members, an aromatic polycarbonate resin composition obtained by adding a phosphorus stabilizer and a fatty acid ester to an aromatic polycarbonate resin.

Improvements in hue and yellowing resistance of the aromatic polycarbonate resin composition of Patent Literature 1 are attained by an aromatic polycarbonate resin composition disclosed in Patent Literature 2, which includes two phosphite stabilizers as phosphorus stabilizers added to the aromatic polycarbonate resin.

When an aromatic polycarbonate resin composition is molded into a light guide member used in an automobile lighting device, it is often the case that the aromatic polycarbonate resin is degraded by the heat applied during the molding process and the resultant molded article is slightly yellowed. Such a light guide member, even if produced without a yellow tinge, is degraded and becomes yellow by being long exposed to heat from the light sources around the light guide member.

The aromatic polycarbonate resin composition of Patent Literature 2 is directed to improving the hue of the aromatic polycarbonate resin composition of Patent Literature 1 and also to preventing the yellowing of the composition.

One of the phosphite stabilizers used in Patent Literature 2 is a phosphite stabilizer having a spiro ring skeleton and the other is free from spiro ring skeletons.

The spiro ring skeleton-containing phosphite stabilizer used in Patent Literature 2 is represented by the following general formula (1).

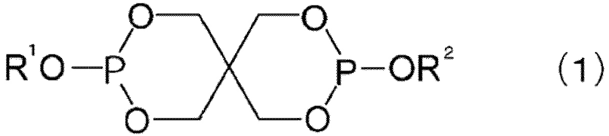

In the formula (1), R¹ and R² are each independently an alkyl group having 1 to 30 carbon atoms or an aryl group having 6 to 30 carbon atoms.

Patent Literature 2 describes that the aryl group having 6 to 30 carbon atoms in the general formula (1) may be a phenyl group or a naphthyl group. The list of specific examples described therein include bis(2,4-di-tert-butylphenyl)pentaerythritol diphosphite, bis(2,6-di-tert-butyl-4-methylphenyl)pentaerythritol diphosphite and phenyl bisphenol A pentaerythritol diphosphite. Patent Literature 2, however, does not describe phosphite stabilizers (B-I) used in the present invention.

Although an epoxy compound (D) used in the present invention is described in Patent Literature 2 as being capable of providing an enhanced hydrolysis resistance, an object of Patent Literature 2 lies only in improving the hue and is not associated with an enhancement of the suppressive effect against thermal discoloration. Patent Literature 2 does not describe Examples which involve the phosphite stabilizers in combination with an epoxy compound and a polyalkylene glycol compound.

Patent Literature 3 describes a polycarbonate resin composition for a light guide plate, comprising, with respect to 100 parts by mass of aromatic polycarbonate resin (A), 0.01-1 parts by mass of polyalkylene glycol or fatty acid ester thereof (B) and 0.005-0.2 parts by mass of phosphorus-based antioxidant (C), wherein the mass ratio of the polyalkylene glycol or fatty acid ester thereof (B) and the phosphorus-based antioxidant (C) is the range of 3-20:1 (B:C) .

Patent Literature 4 describes an aromatic polycarbonate resin composition, including, with respect to 100 parts by mass of an aromatic polycarbonate resin (A), 0.005 to 0.5 parts by mass of a diphosphite compound (B) and 0.001 to 0.5 parts by mass of an alicyclic epoxy compound (C).

Patent Literature 5 describes an aromatic polycarbonate resin molded body, which is obtained by molding a resin molding material containing an aromatic polycarbonate resin (A), in which: the molded body has a thin-walled portion having a thickness of 0.5 mm or less; the molded body has an o-hydroxyacetophenone content of 1 ppm by mass or less and a nitrogen atom content of 15 ppm or less; and the molded body is free of an absorption maximum in a wavelength range of from 500 nm to 600 nm.

Patent Literature 6 describes a polycarbonate resin composition pellet, which has a light transmittance at a wavelength of 380 nm of 97.0% or more when the light transmittance is measured by using a methylene chloride solution having a concentration of 12 g/dL, the solution being charged into a quartz glass cell having an optical path length of 5 cm, and which has a viscosity-average molecular weight (Mv) of from 11,000 to 22,000.
PTL 1: Japanese Patent Publication 2007-204737 A
PTL 2: Japanese Patent Publication 2013-139097 A
PTL 3: JP 2013-231899 A
PTL 4: US 2014/350148 A1
PTL 5: EP 3 070 126 A1
PTL 6: EP 2 799 200 A1

Aromatic polycarbonate resin compositions which are used for light guide members included in automobile lighting devices are demanded to have a better hue than heretofore obtained. Specifically, the hue is desired to be not more than 20 when expressed in YI value measured through 300 mm length with respect to a 300 mm long optical path article. Further, materials having a higher suppressive effect against thermal yellowing are also demanded.

An object of the present invention is to provide an aromatic polycarbonate resin composition which is markedly excellent in hue and has suitable applications including light guide members in automobile lighting devices, and a molded article obtained by molding the aromatic polycarbonate resin composition. Another object of the invention is to provide an aromatic polycarbonate resin composition which has a markedly excellent hue and a very high suppressive effect against thermal yellowing, and a molded article obtained by molding the aromatic polycarbonate resin composition.

### Summary of Invention

The present inventor has found that the above objects can be achieved by adding a specific phosphite stabilizer in combination with a polyalkylene glycol compound and further in combination with an epoxy compound.

The present invention has been accomplished based on the above finding. A summary of the present invention is described below.
[1] An aromatic polycarbonate resin composition comprising:
   an aromatic polycarbonate resin (A);
   0.01 to 0.1 part by mass of a phosphite stabilizer (BI) relative to 100 parts by mass of the aromatic polycarbonate resin (A), the phosphite stabilizer (B-I) being represented by the general formula (I) below;
   0.01 to 0.5 part by mass of a phosphite stabilizer (B-II) relative to 100 parts by mass of the aromatic polycarbonate resin (A), the phosphite stabilizer (B-II) being represented by the general formula (II) below;
   0.05 to 2 parts by mass of a polyalkylene glycol compound (C) relative to 100 parts by mass of the aromatic polycarbonate resin (A), the polyalkylene glycol compound (C) being represented by the general formula (III-1) below; and
   characterized in that the phosphite stabilizer (B-II)/ phosphite stabilizer (B-I) mass ratio is 1 to 10, preferably 1.5 to 8: [0019] 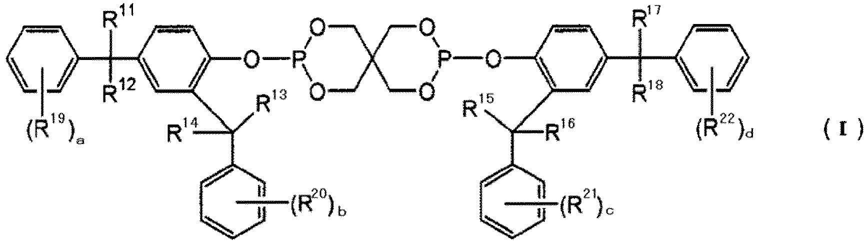 wherein in the formula (I), R¹¹ to R¹⁸ are each independently a hydrogen atom or an alkyl group, R¹⁹ to R²² are each independently an alkyl group, an aryl group or an aralkyl group, and a to d are each independently an integer of 0 to 3; 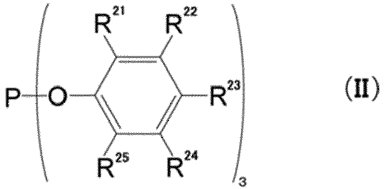 wherein in the formula (II), R²¹ to R²⁵ are each independently a hydrogen atom, an aryl group having 6 to 20 carbon atoms or an alkyl group having 1 to 20 carbon atoms; 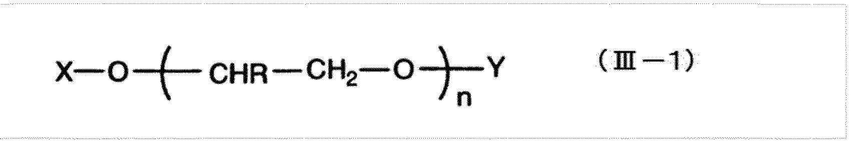 wherein in the formula (III-1), R is an alkyl group having 1 to 3 carbon atoms, X and Y are each independently a hydrogen atom, an aliphatic acyl group having 1 to 23 carbon atoms or an alkyl group having 1 to 23 carbon atoms, and n is an integer of 10 to 400.
[2] The aromatic polycarbonate resin composition according to [1], further comprising an epoxy compound (D) in an amount of 0.0005 to 0.2 parts by mass relative to 100 parts by mass of the aromatic polycarbonate resin (A).
[3] The aromatic polycarbonate resin composition according to [1] or [2], wherein the polyalkylene glycol compound (C) is polybutylene glycol.
[4] The aromatic polycarbonate resin composition according to any one of [1] to [3], wherein the phosphite stabilizer (B-I) is a compound represented by the following structural formula (Ia): 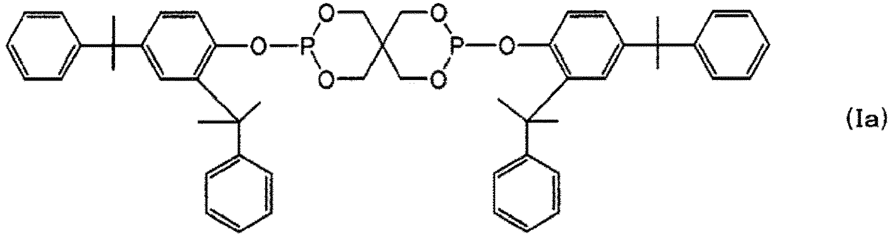
[5] The aromatic polycarbonate resin composition according to any one of [1] to [5], wherein the YI value is not more than 20 when measured through 300 mm length with respect to a 300 mm long optical path article obtained by injection molding the aromatic polycarbonate resin composition.
[6] A molded article obtained by molding the aromatic polycarbonate resin composition according to any one of [1] to [5].
[7] The molded article according to [6], wherein the article is a light guide member.
[8] The molded article according to [7], wherein the article is a light guide member included in an automobile lighting device.

### Advantageous Effects of Invention

An aromatic polycarbonate resin composition according to the present invention includes, in a specific ratio, an aromatic polycarbonate resin (A), a specific phosphite stabilizer (B-I) as a phosphorus stabilizer (B) and a polyalkylene glycol compound (C). The composition attains a markedly excellent hue, with the YI value being not more than 20 when measured through 300 mm length with respect to a 300 mm long optical path article. An aromatic polycarbonate resin composition of the present invention which further includes an epoxy compound (D) achieves a good hue and a high suppressive effect against thermal discoloration without suffering any deteriorations in the inherent characteristics of the polycarbonate resin.

With the above characteristics, the aromatic polycarbonate resin compositions of the invention are suited as polycarbonate resin materials for light guide members and can realize high light transmitting efficiency even when formed into long or thick light guide members, and thus may be suitably used as light guide members, particularly, as light guide members included in automobile lighting devices. Brief Description of Drawing

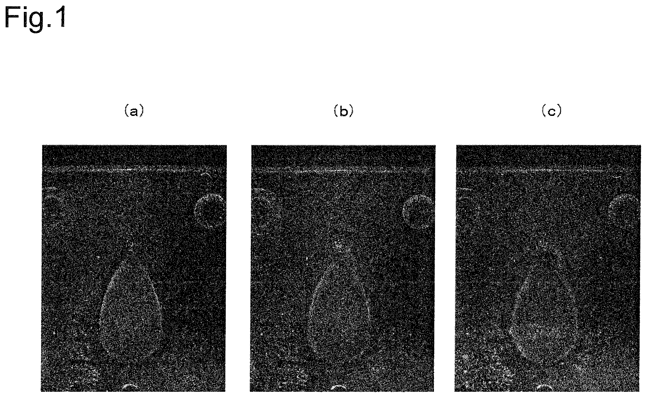

Fig. 1 is a set of pictures of molds which illustrate results of evaluation of mold contamination properties in Examples.

### Description of Embodiments

Hereinbelow, embodiments of the present invention will be described in detail.

### [Aromatic polycarbonate resin compositions]

An aromatic polycarbonate resin composition of the present invention includes an aromatic polycarbonate resin (A) and, per 100 parts by mass of the aromatic polycarbonate resin (A), 0.01 to 0.1 part by mass of a specific phosphite stabilizer (B-I) represented by general formula (I), 0.01 to 0.5 part by mass of a specific phosphite stabilizer (B-II) represented by general formula (II), and 0.05 to 2 parts by mass of a specific polyalkylene glycol compound (C) represented by general formula (III-1), and characterized in that the phosphite stabilizer (B-II)/ phosphite stabilizer (B-I) mass ratio is 1 to 10, preferably 1.5 to 8.

The aromatic polycarbonate resin composition of the invention may further include 0.0005 to 0.2 parts by mass of an epoxy compound (D), thereby attaining a further improvement in the resistance to thermal discoloration.

In the following, the term "initial hue" indicates the hue immediately after preparation of an article by the molding of the aromatic polycarbonate resin composition, and the term "suppressive effect against thermal yellowing" refers to an effect of suppressing the yellowing of such a molded article during long exposure to heating conditions.

### <Aromatic polycarbonate resins (A)>

The aromatic polycarbonate resin (A) is an aromatic polycarbonate polymer obtained by reacting an aromatic hydroxy compound with phosgene or a carbonate diester. The aromatic polycarbonate polymer may have a branch. The aromatic polycarbonate resin may be produced by any method without limitation. A conventional method such as a phosgene process (an interfacial polymerization process) or a melt process (a transesterification process) may be used.

Typical examples of the aromatic dihydroxy compounds include bis(4-hydroxyphenyl)methane, 2,2-bis(4-hydroxyphenyl)propane, 2,2-bis(4-hydroxy-3-methylphenyl)propane, 2,2-bis(4-hydroxy-3-t-butylphenyl)propane, 2,2-bis(4-hydroxy-3,5-dimethylphenyl)propane, 2,2-bis(4-hydroxy-3,5-dibromophenyl)propane, 4,4-bis(4-hydroxyphenyl)heptane, 1,1-bis(4-hydroxyphenyl)cyclohexane, 4,4'-dihydroxybiphenyl, 3,3',5,5'-tetramethyl-4,4'-dihydroxybiphenyl, bis(4-hydroxyphenyl)sulfone, bis(4-hydroxyphenyl)sulfide, bis(4-hydroxyphenyl)ether and bis(4-hydroxyphenyl)ketone.

Among the above aromatic dihydroxy compounds, 2,2-bis(4-hydroxyphenyl)propane (bisphenol A) is particularly preferable.

The aromatic dihydroxy compounds may be used singly, or two or more may be used in combination.

The production of the aromatic polycarbonate resin (A) may involve a small amount of a polyhydric phenol or the like having three or more hydroxyl groups in the molecule, in addition to the aromatic dihydroxy compound. In this case, the aromatic polycarbonate resin (A) will have a branch.

Examples of the polyhydric phenols having three or more hydroxyl groups include polyhydroxy compounds such as phloroglucine, 4,6-dimethyl-2,4,6-tris(4-hydroxyphenyl)heptene-2, 4,6-dimethyl-2,4,6-tris(4-hydroxyphenyl)heptane, 2,6-dimethyl-2,4,6-tris(4-hydroxyphenyl)heptene-3, 1,3,5-tris(4-hydroxyphenyl)benzene and 1,1,1-tris(4-hydroxyphenyl)ethane, and 3,3-bis(4-hydroxyaryl)oxindole (= isatin bisphenol), 5-chloroisatin, 5,7-dichloroisatin and 5-bromoisatin. Of these, 1,1,1-tris(4-hydroxyphenyl)ethane or 1,3,5-tris(4-hydroxyphenyl)benzene is preferable. The amount in which the polyhydric phenol is used is preferably 0.01 to 10 mol%, and more preferably 0.1 to 2 mol% relative to the aromatic dihydroxy compound (100 mol%).

In the polymerization by a transesterification process, a carbonate diester is used as a monomer in place of phosgene. Typical examples of the carbonate diesters include substituted diaryl carbonates such as diphenyl carbonate and ditolyl carbonate, and dialkyl carbonates such as dimethyl carbonate, diethyl carbonate and di-tert-butyl carbonate. The carbonate diesters may be used singly, or two or more may be used in combination. Of these compounds, diphenyl carbonate and substituted diphenyl carbonate are preferable.

Part of the carbonate diester, preferably not more than 50 mol% thereof, or more preferably not more than 30 mol% thereof may be replaced by a dicarboxylic acid or a dicarboxylate ester. Typical examples of the dicarboxylic acids and dicarboxylate esters include terephthalic acid, isophthalic acid, diphenyl terephthalate and diphenyl isophthalate. When part of the carbonate diester is replaced by a dicarboxylic acid or a dicarboxylate ester, the product obtained is a polyester carbonate.

The transesterification for the production of the aromatic polycarbonate resin usually involves a catalyst. The catalytic species is not particularly limited. A usual choice is a basic compound such as an alkali metal compound, an alkaline earth metal compound, a basic boron compound, a basic phosphorus compound, a basic ammonium compound or an amine compound. Of these, an alkali metal compound and/or an alkaline earth metal compound is particularly preferable. These compounds may be used singly, or two or more may be used in combination. In the transesterification process, the catalyst is generally deactivated with a deactivator such as a p-toluenesulfonate ester.

To impart properties such as flame retardance, the aromatic polycarbonate resin (A) may be copolymerized with a polymer or oligomer having a siloxane structure.

Viscosity average molecular weight of the aromatic polycarbonate resin (A) is preferably 10,000 to 22,000. When the viscosity average molecular weight of the aromatic polycarbonate resin (A) is less than 10,000, the obtainable molded articles are often unsatisfactory in mechanical strength and may fail to attain sufficient mechanical strength. When the viscosity average molecular weight of the aromatic polycarbonate resin (A) is more than 22,000, the aromatic polycarbonate resin (A) has so high a melt viscosity that good fluidity can not be obtained when the aromatic polycarbonate resin composition is molded by, for example, an injection molding method to produce a long article such as a light guide member. When the viscosity average molecular weight of the aromatic polycarbonate resin (A) is above 22,000, the shearing of the resin produces a large amount of heat and the resin is degraded by thermal decomposition, with the result that molded articles that are obtained sometimes fail to attain an excellent hue.

The viscosity average molecular weight of the aromatic polycarbonate resin (A) is more preferably 12,000 to 18,000, and still more preferably 14,000 to 17,000.

The viscosity average molecular weight of the aromatic polycarbonate resin (A) is a value calculated from the solution viscosity measured at a temperature of 20°C using methylene chloride as a solvent.

The aromatic polycarbonate resin (A) may be a mixture of two or more kinds of aromatic polycarbonate resins having different viscosity average molecular weights, or aromatic polycarbonate resins having a viscosity average molecular weight outside the above range may be mixed to control the viscosity average molecular weight to fall in the above range.

### <Phosphorus stabilizers (B)>

The aromatic polycarbonate resin composition of the invention includes, as a phosphorus stabilizer (B), a phosphite stabilizer (B-I) represented by the following general formula (I):

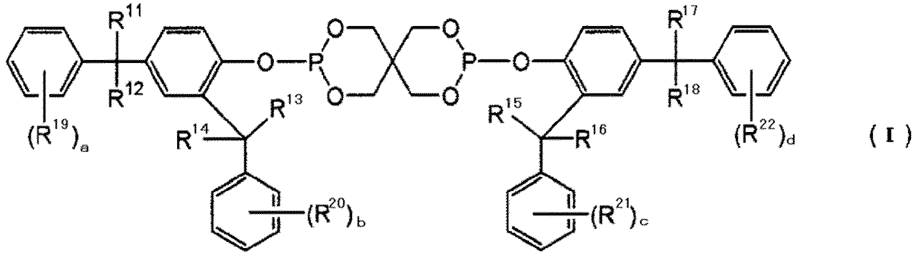

In the formula (I), R¹¹ to R¹⁸ are each independently a hydrogen atom or an alkyl group, R¹⁹ to R²² are each independently an alkyl group, an aryl group or an aralkyl group, and a to d are each independently an integer of 0 to 3.

In the general formula (I), R¹¹ to R¹⁸ are preferably each independently an alkyl group having 1 to 5 carbon atoms, and are preferably methyl groups. The letters a to d are preferably 0.

The phosphite stabilizer (B-I) is preferably bis(2,4-dicumylphenyl)pentaerythritol diphosphite represented by the following structural formula (Ia):

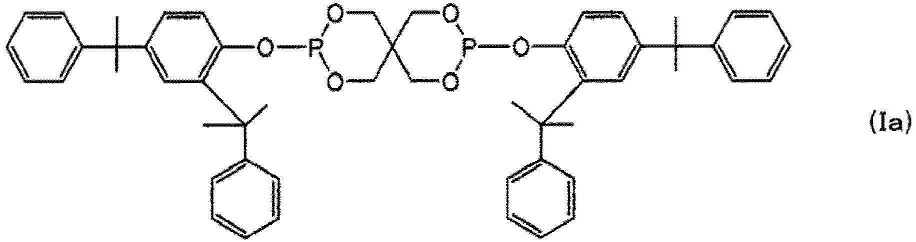

The phosphite stabilizers (B-I) may be used singly, or two or more may be used in combination.

In the aromatic polycarbonate resin composition of the present invention, the content of the phosphite stabilizer (B-I) is 0.01 to 0.1 part by mass per 100 parts by mass of the aromatic polycarbonate resin (A). When the content of the phosphite stabilizer (B-I) is less than 0.01 part by mass, a sufficient suppressive effect against thermal yellowing cannot be obtained and the initial hue tends to be unsatisfactory. When the content of the phosphite stabilizer (B-I) is above 0.1 part by mass, the molding process is accompanied by the generation of a large amount of gas and also by the accumulation of mold deposits which give rise to transfer failures, causing a risk that the obtainable molded articles may have a lowered optical transmittance. The content of the phosphite stabilizer (BI) is preferably 0.015 to 0.08 parts by mass, and more preferably 0.02 to 0.06 parts by mass per 100 parts by mass of the aromatic polycarbonate resin (A).

In the aromatic polycarbonate resin composition of the invention, a phosphite stabilizer (B-II) represented by the general formula (II) below is used as an additional phosphorus stabilizer (B) in combination with the phosphite stabilizer (B-I). This combined use is advantageous in that the initial hue is further improved and the suppressive effect against thermal yellowing is further enhanced.

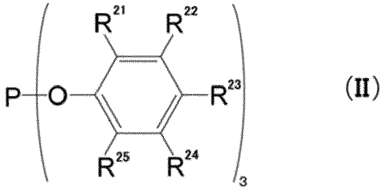

In the formula (II), R²¹ to R²⁵ are each independently a hydrogen atom, an aryl group having 6 to 20 carbon atoms or an alkyl group having 1 to 20 carbon atoms.

Examples of the alkyl groups represented by R²¹ to R²⁵ in the general formula (II) include methyl group, ethyl group, propyl group, n-propyl group, n-butyl group, tert-butyl group, hexyl group and octyl group.

A particularly preferred phosphite stabilizer (B-II) is (tris(2,4-di-tert-butylphenyl) phosphite represented by the following structural formula (IIa):

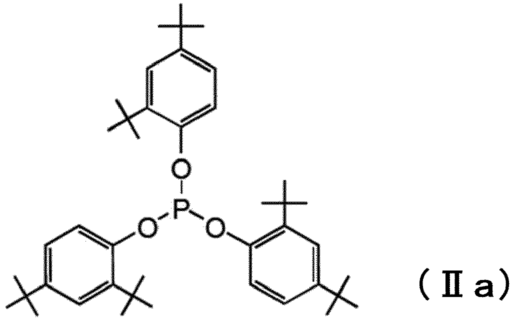

The phosphite stabilizers (B-II) may be used singly, or two or more may be used in combination.

In the aromatic polycarbonate resin composition of the invention, the content of the phosphite stabilizer (B-II) is 0.01 to 0.5 parts by mass, particularly preferably 0.03 to 0.3 parts by mass, and further preferably 0.05 to 0.2 parts by mass per 100 parts by mass of the aromatic polycarbonate resin (A). In the aromatic polycarbonate resin composition, the phosphite stabilizer (B-II)/phosphite stabilizer (B-I) mass ratio is 1 to 10, preferably 1.5 to 8, and further preferably 1.8 to 6. When the content of the phosphite stabilizer (B-II) is below the above range, the phosphite stabilizer (B-II) fails to provide sufficient effects in the improvements in initial hue and thermal yellowing resistance. When the content exceeds the above range, the obtainable effects are saturated and the total content of the phosphorus stabilizers (B) is so increased that the molding process is disadvantageously accompanied by the generation of a large amount of gas and also by the accumulation of mold deposits which cause transfer failures.

As the aromatic polycarbonate resin composition of the invention includes the phosphite stabilizer (B-I) and the phosphite stabilizer (B-II) as the phosphorus stabilizers (B), the total content thereof is preferably not more than 0.3 parts by mass, and more preferably not more than 0.2 parts by mass per 100 parts by mass of the aromatic polycarbonate resin (A).

### <Polyalkylene glycol compounds (C)>

The polyalkylene glycol compound (C) is a branched polyalkylene glycol compound represented by the general formula (III-1). The polyalkylene glycol compound (C) may be a copolymer with another comonomer, but is preferably a homopolymer.

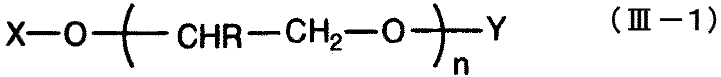

In the formula (III-1), R is an alkyl group having 1 to 3 carbon atoms, X and Y are each independently a hydrogen atom, an aliphatic acyl group having 1 to 23 carbon atoms or an alkyl group having 1 to 23 carbon atoms, and n is an integer of 10 to 400.

In the general formula (III-1), the integer (polymerization degree) n is 10 to 400, preferably 15 to 200, and more preferably 20 to 100. If the polymerization degree n is less than 10, the amount of gas generated during the molding process is increased and the gas may cause molding failures, for example, voids, burn marks and transfer failures. If the polymerization degree n exceeds 400, the compound may fail to provide a sufficient effect in enhancing the hue of the aromatic polycarbonate resin composition.

Examples of the branched polyalkylene glycol compounds include polypropylene glycol and polybutylene glycol of the general formula (III-1) in which X and Y are hydrogen atoms and R is a methyl group or an ethyl group, respectively. Polybutylene glycol is particularly preferable.

The performance of the polyalkylene glycol compound (C) is not affected even if an end or both ends of the compound are capped with a fatty acid or an alcohol, and such a fatty acid esterified compound or an etherified compound is usable similarly to the intact compound. Thus, X and/or Y in the general formula (III-1) may be an aliphatic acyl group or alkyl group having 1 to 23 carbon atoms.

The fatty acid esterified compounds may be linear or branched fatty acid esters. The fatty acids that constitute the fatty acid esters may be saturated fatty acids or unsaturated fatty acids. The fatty acid esterified compounds may be substituted with substituents such as hydroxyl groups in place of part of the hydrogen atoms.

Examples of the fatty acids for constituting the fatty acid esters include monovalent or divalent, saturated or unsaturated fatty acids having 1 to 23 carbon atoms. Specific examples of the monovalent saturated fatty acids include formic acid, acetic acid, propionic acid, butyric acid, valeric acid, caproic acid, enanthic acid, caprylic acid, capric acid, lauric acid, myristic acid, pentadecylic acid, palmitic acid, heptadecylic acid, stearic acid, nonadecanoic acid, arachidic acid and behenic acid. Specific examples of the monovalent unsaturated fatty acids include oleic acid, elaidic acid, linoleic acid, linolenic acid and arachidonic acid. Specific examples of the divalent fatty acids having 10 or more carbon atoms include sebacic acid, undecanedioic acid, dodecanedioic acid, tetradecanedioic acid, thapsic acid, decenedioic acid, undecenedioic acid and dodecenedioic acid.

The fatty acids may be used singly, or two or more may be used in combination. The fatty acids include those fatty acids which have one or more hydroxyl groups in the molecule.

Specific examples of preferred fatty acid esters of branched polyalkylene glycols include polypropylene glycol stearate represented by the general formula (III-1) in which R is a methyl group and X and Y are aliphatic acyl groups having 18 carbon atoms, and polypropylene glycol behenate in which R is a methyl group and X and Y are aliphatic acyl groups having 22 carbon atoms. Specific examples of preferred fatty acid esters of linear polyalkylene glycols include polyalkylene glycol monopalmitate ester, polyalkylene glycol dipalmitate ester, polyalkylene glycol monostearate ester, polyalkylene glycol distearate ester, polyalkylene glycol (monopalmitate·monostearate) ester and polyalkylene glycol behenate.

The alkyl groups that constitute the alkyl ethers of the polyalkylene glycols may be linear or branched. Examples include alkyl groups having 1 to 23 carbon atoms such as methyl group, ethyl group, propyl group, butyl group, octyl group, lauryl group and stearyl group. Some preferred such polyalkylene glycol compounds (C) are alkyl methyl ethers, ethyl ethers, butyl ethers, lauryl ethers and stearyl ethers of polyalkylene glycols.

The number average molecular weight of the polyalkylene glycol compound (C) is preferably 200 to 5,000, and is more preferably not less than 300, and still more preferably not less than 500, and more preferably not more than 4,000, still more preferably not more than 3,000, particularly preferably not more than 2000, further preferably less than 1000, and most preferably not more than 800. If the molecular weight exceeds the upper limit of the above range, the compatibility tends to be decreased. Below the lower limit, gas tends to be generated during the molding process. The number average molecular weight of the polyalkylene glycol compound (C) is a number average molecular weight calculated based on the hydroxyl value measured in accordance with JIS K1577.

The polyalkylene glycol compound (C) exhibits a higher effect in reducing mold contamination properties (mold deposits) during the molding process with decreasing number average molecular weight thereof.

The polyalkylene glycol compounds (C) may be used singly, or two or more may be used in combination.

In the aromatic polycarbonate resin composition of the invention, the content of the polyalkylene glycol compound (C) is 0.05 to 2 parts by mass per 100 parts by mass of the aromatic polycarbonate resin (A). If the content of the polyalkylene glycol compound (C) is below 0.05 parts by mass or is above 2 parts by mass, the obtainable molded articles tend to have a poor initial hue. The content of the polyalkylene glycol compound (C) is preferably 0.1 to 1.5 parts by mass, more preferably 0.2 to 1.2 parts by mass, and still more preferably more than 0.5 parts by mass and not more than 1.0 part by mass per 100 parts by mass of the aromatic polycarbonate resin (A).

### [Epoxy compounds (D)]

The epoxy compound (D) used herein is a compound having one or more epoxy groups in the molecule. Specifically, preferred examples include phenyl glycidyl ether, allyl glycidyl ether, t-butyl phenyl glycidyl ether, 3,4-epoxycyclohexylmethyl-3',4'-epoxycyclohexylcarboxylate, 3,4-epoxy-6-methylcyclohexylmethyl-3',4'-epoxy-6'-methylcyclohexylcarboxylate, 2,3-epoxycyclohexylmethyl-3',4'-epoxycyclohexylcarboxylate, 4-(3,4-epoxy-5-methylcyclohexyl)butyl-3',4'-epoxycyclohexylcarboxylate, 3,4-epoxycyclohexylethylene oxide, cyclohexylmethyl-3,4-epoxycyclohexylcarboxylate, 3,4-epoxy-6-methylcyclohexylmethyl-6'-methylcyclohexylcarboxylate, bisphenol-A diglycidyl ether, tetrabromobisphenol-A glycidyl ether, diglycidyl ester of phthalic acid, diglycidyl ester of hexahydrophthalic acid, bis-epoxydicyclopentadienyl ether, bis-epoxyethylene glycol, bis-epoxycyclohexyl adipate, butadiene diepoxide, tetraphenylethylene epoxide, octyl epoxy tallate, epoxidized polybutadiene, 3,4-dimethyl-1,2-epoxycyclohexane, 3,5-dimethyl-1,2-epoxycyclohexane, 3-methyl-5-t-butyl-1,2-epoxycyclohexane, octadecyl-2,2-dimethyl-3,4-epoxycyclohexylcarboxylate, N-butyl-2,2-dimethyl-3,4-epoxycyclohexylcarboxylate, cyclohexyl-2-methyl-3,4-epoxycyclohexylcarboxylate, N-butyl-2-isopropyl-3,4-epoxy-5-methylcyclohexylcarboxylate, octadecyl-3,4-epoxycyclohexylcarboxylate, 2-ethylhexyl-3',4'-epoxycyclohexylcarboxylate, 4,6-dimethyl-2,3-epoxycyclohexyl-3',4'-epoxycyclohexylcarboxylate, 4,5-epoxytetrahydrophthalic anhydride, 3-t-butyl-4,5-epoxytetrahydrophthalic anhydride, diethyl 4,5-epoxy-cis-1,2-cyclohexyldicarboxylate, di-n-butyl-3-t-butyl-4,5-epoxy-cis-1,2-cyclohexyldicarboxylate, epoxidized soybean oil and epoxidized linseed oil. Of these, in particular, alicyclic epoxy compounds having two or more epoxy groups in the molecule are preferable.

The epoxy compounds (D) may be used singly, or two or more may be used in combination.

When the aromatic polycarbonate resin composition of the invention contains the epoxy compound (D), the content of the epoxy compound (D) is usually 0.0005 to 0.2 parts by mass per 100 parts by mass of the polycarbonate resin (A), and is preferably not less than 0.001 part by mass, more preferably not less than 0.003 parts by mass, still more preferably not less than 0.005 parts by mass, particularly preferably not less than 0.01 part by mass, and further preferably not less than 0.03 parts by mass, and preferably not more than 0.15 by mass, more preferably not more than 0.1 part by mass, and still more preferably not more than 0.05 parts by mass. When the content of the epoxy compound (D) is less than 0.0005 parts by mass, the hue and the suppressive effect against thermal discoloration are unsatisfactory. Adding more than 0.2 parts by mass of the compound not only deteriorates the suppressive effect against thermal discoloration but also results in decreases in hue and hygrothermal stability.

### <Other components>

The aromatic polycarbonate resin composition of the invention may contain optional components such as antioxidants, releasing agents, UV absorbents, fluorescent whitening agents, dyes, pigments, flame retardants, impact modifiers, antistatic agents, lubricants, plasticizers, compatibilizers and fillers, while still achieving the objects of the invention.

### <Methods for producing aromatic polycarbonate resin compositions>

The aromatic polycarbonate resin composition of the invention may be produced by any method without limitation. For example, the components may be mixed at once or in portions at any stages during the formation of final molded articles, and the mixture may be melt kneaded. The components may be mixed together with use of, for example, a tumbling mixer, a Henschel mixer or the like, or may be mixed together by being supplied quantitatively from feeders to an extruder hopper. The melt kneading may be performed with, for example, a single-screw kneading extruder, a twinscrew kneading extruder, a kneader, a Banbury mixer or the like.

### [Molded articles]

A molded article of the present invention is obtained by molding the aromatic polycarbonate resin composition of the invention.

The method for molding the aromatic polycarbonate resin composition of the invention is not particularly limited. Example methods include injection molding, compression molding and injection compression molding, with injection molding being preferable.

To prevent the resin from thermal degradation during the molding process and to ensure an excellent initial hue, the aromatic polycarbonate resin composition of the invention is preferably molded in an inert gas atmosphere such as nitrogen.

The molded articles obtained by molding the aromatic polycarbonate resin composition of the present invention are less yellowed when being long exposed to heating conditions and have a markedly excellent initial hue as compared to the conventional articles. Thus, the articles may be suitably used as light guide members in lighting devices, in particular, as light guide members in automobile lighting devices which are exposed to heating conditions created by not only the heat from the light sources of the daytime running lamps but also by the heat generated by the incandescent lamps. By virtue of their excellent initial hue and excellent suppressive effect against thermal yellowing, the molded articles as light guide members can maintain high light transmitting efficiency over a long period and attain a marked reduction in the frequency in which the light guide members are exchanged.

### [YI value]

The aromatic polycarbonate resin compositions of the present invention attain a markedly excellent initial hue. The hue far outperforms that of conventional articles, and the YI value, as measured by the method described later in Examples through 300 mm length with respect to a 300 mm long optical path article obtained by injection molding the aromatic polycarbonate resin composition of the present invention, is usually not more than 20, preferably not more than 16, and more preferably not more than 14.

### Examples

The present invention will be described in greater detail by Examples presented below.

### [Materials used]

In Examples and Comparative Examples, the following materials were used.

### <Aromatic polycarbonate resin (A)>

"IUPILON (registered trademark) H-4000N" manufactured by Mitsubishi Engineering-Plastics Corporation: bisphenol A aromatic polycarbonate resin produced by interfacial polymerization (viscosity average molecular weight 16,000)

### <Phosphorus stabilizers (B)>

### <Phosphite stabilizer (B-I)>

"Doverphos S-9228" manufactured by Properties & Characteristics: bis(2,4-dicumylphenyl)pentaerythritol diphosphite

### <Phosphite stabilizer (B-II)>

"ADK STAB AS2112" manufactured by ADEKA CORPORATION: tris(2,4-di-tert-butylphenyl) phosphite

### <Other phosphorus heat stabilizer>

"ADK STAB PEP-36" manufactured by ADEKA CORPORATION: bis(2,6-di-tert-butyl-4-methylphenyl)pentaerythritol diphosphite

### <Polyalkylene glycol compounds (C)>

### <Polybutylene glycol (C-1)>

"UNIOL PB-700" manufactured by NOF CORPORATION (number average molecular weight 700)

### <Polybutylene glycol (C-2)>

"UNIOL PB-1000" manufactured by NOF CORPORATION (number average molecular weight 1,000)

### <Polybutylene glycol (C-3)>

"UNIOL PB-500" manufactured by NOF CORPORATION (number average molecular weight 500)

### <Polypropylene glycol (C-4)>

"UNIOL D-1000" manufactured by NOF CORPORATION (number average molecular weight 1,000)

### <Epoxy compound (D)>

"CELLOXIDE 2021P" manufactured by DAICEL CORPORATION: 3,4-epoxycyclohexylmethyl-3',4'-epoxycyclohexylcarboxylate

### <Fatty acid ester>

"RIKEMAL S-100A" manufactured by RIKEN VITAMIN CO., LTD.: stearic acid monoglyceride

### <Releasing agent>

"SH556" manufactured by Dow Corning Toray Silicone Co., Ltd.: methylphenyl polysiloxane

### [Evaluation methods]

Aromatic polycarbonate resin compositions obtained were evaluated by the following methods.

### <Evaluation of initial hue (YI)>

Pellets of an aromatic polycarbonate resin composition were dried in a hot air circulation dryer at 120°C for 4 to 8 hours and were molded with an injection molding machine ("EC100" manufactured by TOSHIBA MACHINE CO., LTD.) at a temperature of 280°C to give a 300 mm long optical path article (6 mm × 4 mm × 300 mm, L/d = 50). The article was analyzed on a long pathlength transmission spectrophotometer ("ASA 1" manufactured by NIPPON DENSHOKU INDUSTRIES CO., LTD.) to determine the YI value through 300 mm length.

### <Evaluation of thermal discoloration resistance (ΔYI₁) >

The long optical path article obtained in the above evaluation of initial hue (YI) was held at 120°C for 1000 hours, and the YI was measured through the 300 mm long optical path (YI after treatment). The difference between the YI values (ΔYI₁ = YI after treatment - initial YI) was calculated to evaluate thermal discoloration resistance (ΔYI₁) .

### <Evaluation of residential discoloration resistance (ΔYI₂)>

A 300 mm long optical path article was obtained in the same manner as in the above evaluation of initial hue (YI), except that the pellets were caused to stay in the injection molding machine at a temperature of 280°C for 25 minutes and were thereafter injection molded. The YI was measured through the 300 mm long optical path (YI after treatment) in the same manner. The difference between the YI values (ΔYI₂ = YI after residence - initial YI) was calculated to evaluate residential discoloration resistance (ΔYI₂).

### [Examples I-1 to 15 and Comparative Examples I-1 to 4]

The components shown in Table 1 were mixed together in the ratio described in Table 1 with use of a tumbling mixer to give a uniform mixture. The mixture was supplied to a single-screw extruder equipped with a full flight screw and a vent ("VS-40" manufactured by Isuzu Kakouki K.K.) and was kneaded at a screw rotational speed of 80 rpm, an output of 20 kg/h and a barrel temperature of 250°C. The kneadate was extruded into a strand from the tip of the extruder nozzle. The extrudate was quenched in a water bath and was cut with a pelletizer into pellets. Pellets of an aromatic polycarbonate resin composition were thus obtained.

Table 1 describes the evaluation results of the aromatic polycarbonate resin compositions obtained.

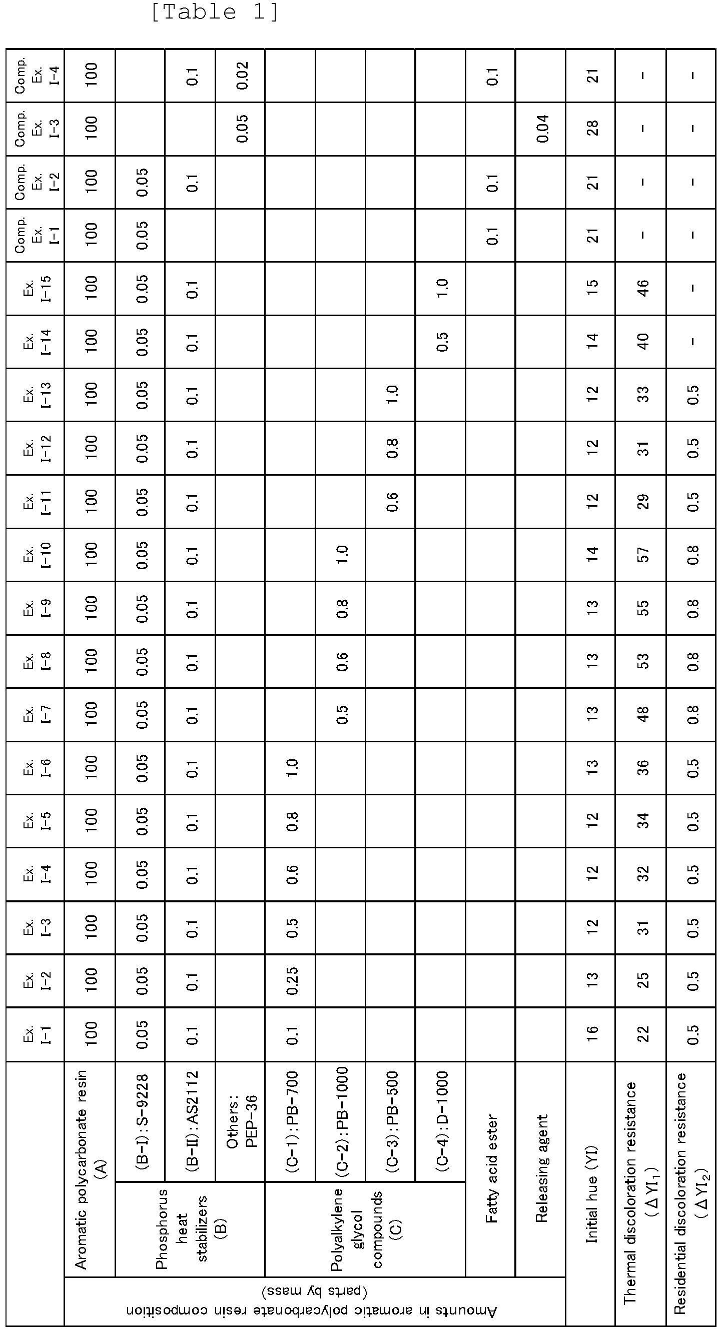

The results in Table 1 show the following.

Comparative Examples 1-1, 2 and 4, which involved the fatty acid ester in place of the polyalkylene glycol compound (C), failed to satisfy a YI value of 20 or less. Comparative Example 1-3 using the releasing agent in place of the polyalkylene glycol compound (C) resulted in a particularly poor hue, with the YI value being 28.

In contrast, Examples I-1 to 15 using the phosphite stabilizer S-9228 as the phosphite stabilizer (B-I) according to the present invention and the polyalkylene glycol compound (C) attained an excellent hue, with the YI being not more than 16.

Example I-1 resulted in a slightly high YI value as compared to Examples 1-2 to 15 because of the amount of the polyalkylene glycol being small. However, as demonstrated in Examples 1-2 to 15, the YI value can be decreased and the initial hue can be enhanced by increasing the amount of the polyalkylene glycol.

From the comparison of Examples 1-3 to 13 with Examples 1-14 and 15, polybutylene glycol has been shown to be more effective as the polyalkylene glycol compound (C) to improve the hue than polypropylene glycol.

[Examples II-1 to 22 , Examples 1-2 to 6 and 11 to 13, and and Comparative Examples II-3 to 4] The components shown in Tables 2 to 4 were mixed together in the ratio described in Tables 2 to 4 with use of a tumbling mixer to give a uniform mixture. The mixture was supplied to a single-screw extruder equipped with a full flight screw and a vent ("VS-40" manufactured by Isuzu Kakouki K.K.) and was kneaded at a screw rotational speed of 80 rpm, an output of 20 kg/h and a barrel temperature of 250°C. The kneadate was extruded into a strand from the tip of the extruder nozzle. The extrudate was quenched in a water bath and was cut with a pelletizer into pellets. Pellets of an aromatic polycarbonate resin composition were thus obtained.

Tables 2 to 4 describe the evaluation results of the aromatic polycarbonate resin compositions obtained.

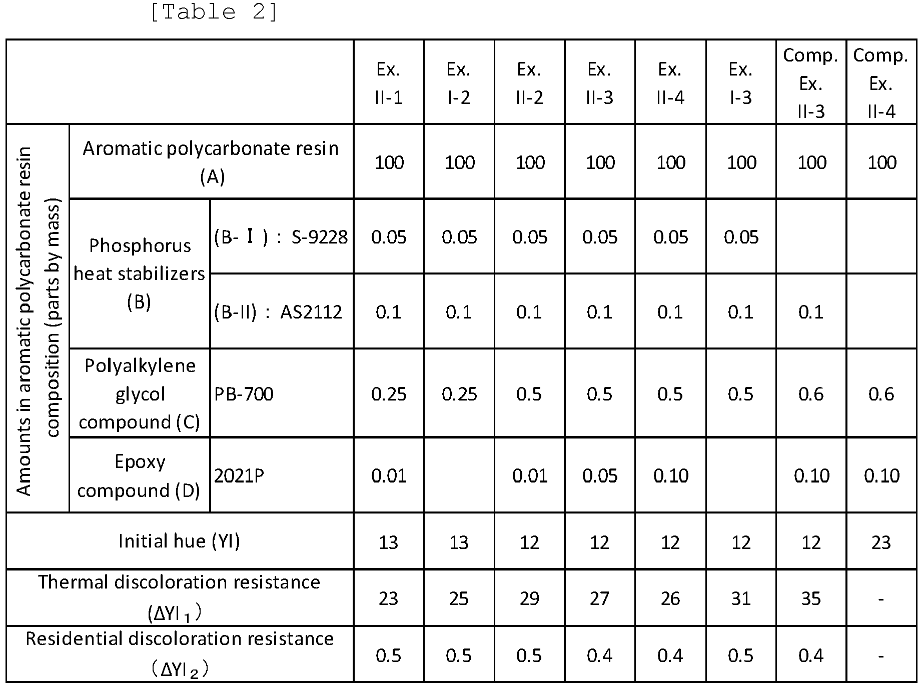

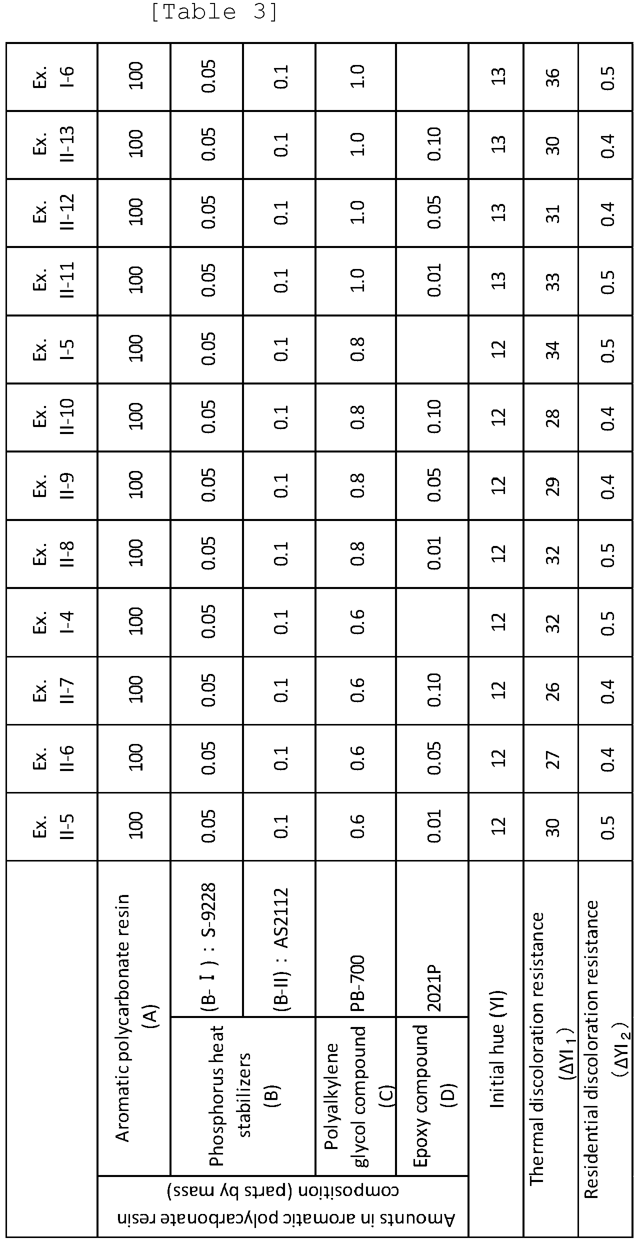

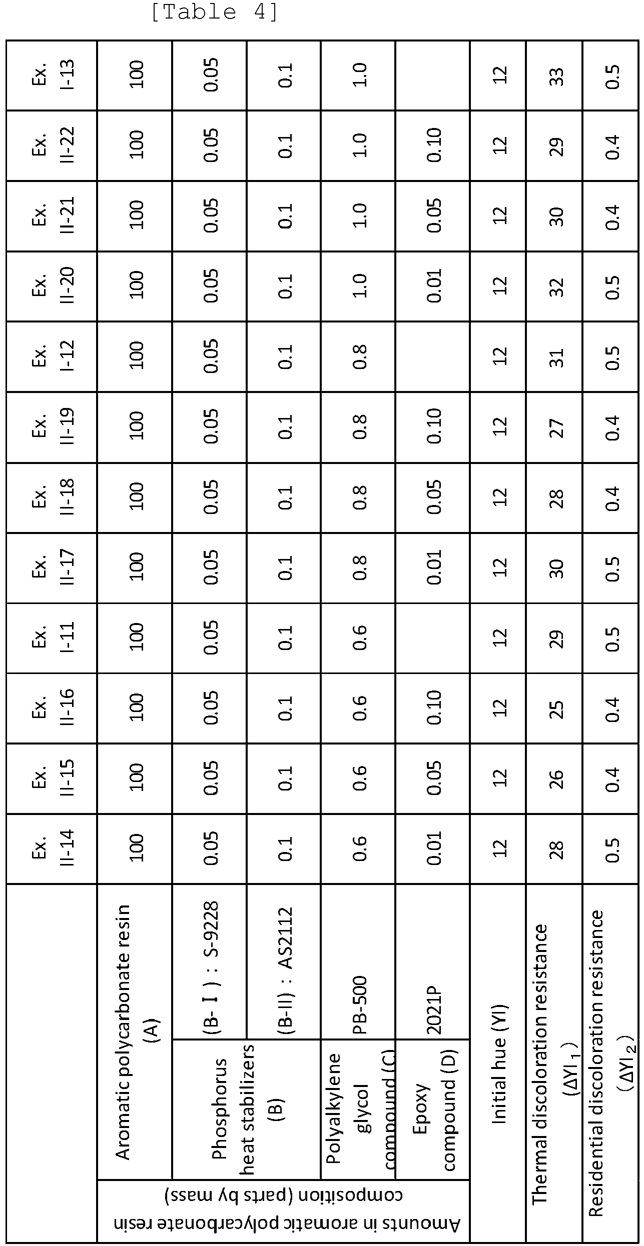

Tables 2 to 4 show that the incorporation of the epoxy compound (D) in addition to the specific phosphorus stabilizers (B) and the polyalkylene glycol compound (C) results in improvements in thermal discoloration resistance and residential discoloration resistance.

### [Evaluation of mold contamination properties in injection molding]

Pellets of an aromatic polycarbonate resin composition (written as "Pellets 1000") were produced in the same manner as in Example 11-7, except that "UNIOL PB-1000" was used as the polyalkylene glycol compound (C). Pellets 1000, the pellets of the aromatic polycarbonate resin composition obtained in Example II-7 (written as "Pellets 700"), and the pellets of the aromatic polycarbonate resin composition obtained in Example 11-16 (written as "Pellets 500") were each dried at 120°C for 5 hours and injection molded by 200 shots with an injection molding machine ("MINIMAT M8/7A" manufactured by Sumitomo Heavy Industries, Ltd.) using a drop-molded mold at a cylinder temperature of 280°C, a molding cycle of 10 seconds and a mold temperature of 80°C. After the molding process, the specular metal surface of the fixed portion of the mold was visually inspected for contamination by white deposits to evaluate mold contamination properties.

The results and the chemical compositions of the pellets are described in Table 5.

The pictures of the mold surface are shown in Fig. 1 ((a) Pellets 500, (b) Pellets 700 and (c) Pellets 1000).

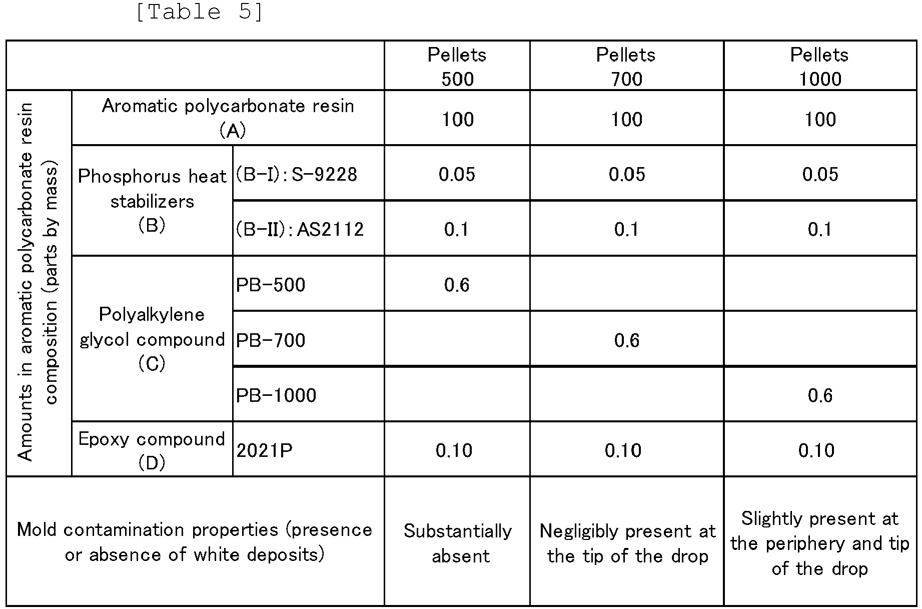

From Table 5, it has been shown that mold contamination is smaller with decreasing molecular weight of the polyalkylene glycol compound (C).

## Claims

1. An aromatic polycarbonate resin composition comprising:
an aromatic polycarbonate resin (A);
0.01 to 0.1 part by mass of a phosphite stabilizer (B-I) relative to 100 parts by mass of the aromatic polycarbonate resin (A), the phosphite stabilizer (B-I) being represented by the general formula (I) below;
0.01 to 0.5 part by mass of a phosphite stabilizer (B-II) relative to 100 parts by mass of the aromatic polycarbonate resin (A), the phosphite stabilizer (B-II) being represented by the general formula (II) below;
0.05 to 2 parts by mass of a polyalkylene glycol compound (C) relative to 100 parts by mass of the aromatic polycarbonate resin (A), the polyalkylene glycol compound (C) being represented by the general formula (III-1) below; and
**characterized in that** the phosphite stabilizer (B-II)/ phosphite stabilizer (B-I) mass ratio is 1 to 10, preferably 1.5 to 8: 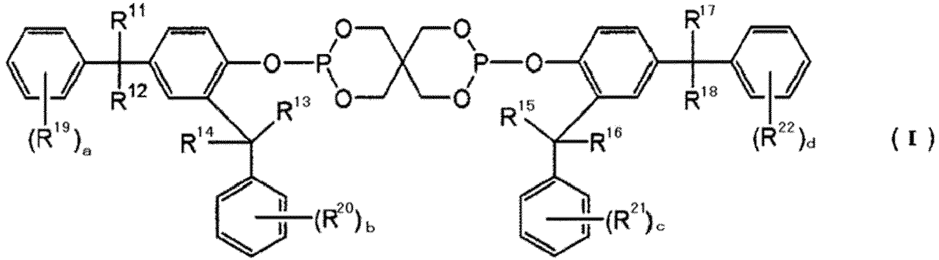 wherein in the formula (I), R¹¹ to R¹⁸ are each independently a hydrogen atom or an alkyl group, R¹⁹ to R²² are each independently an alkyl group, an aryl group or an aralkyl group, and a to d are each independently an integer of 0 to 3; 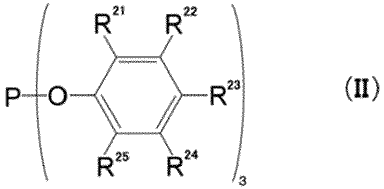 wherein in the formula (II), R²¹ to R²⁵ are each independently a hydrogen atom, an aryl group having 6 to 20 carbon atoms or an alkyl group having 1 to 20 carbon atoms; 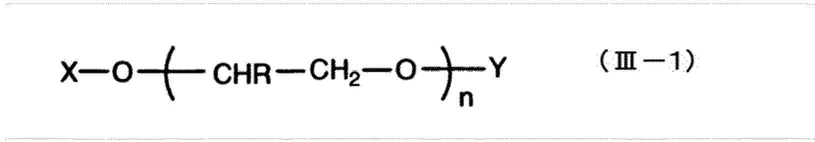 wherein in the formula (III-1), R is an alkyl group having 1 to 3 carbon atoms, X and Y are each independently a hydrogen atom, an aliphatic acyl group having 1 to 23 carbon atoms or an alkyl group having 1 to 23 carbon atoms, and n is an integer of 10 to 400.

2. The aromatic polycarbonate resin composition according to Claim 1, further comprising an epoxy compound (D) in an amount of 0.0005 to 0.2 parts by mass relative to 100 parts by mass of the aromatic polycarbonate resin (A).

3. The aromatic polycarbonate resin composition according to Claim 1 or 2, wherein the polyalkylene glycol compound (C) is polybutylene glycol.

4. The aromatic polycarbonate resin composition according to any one of Claims 1 to 3, wherein the phosphite stabilizer (B-I) is a compound represented by the following structural formula (Ia):

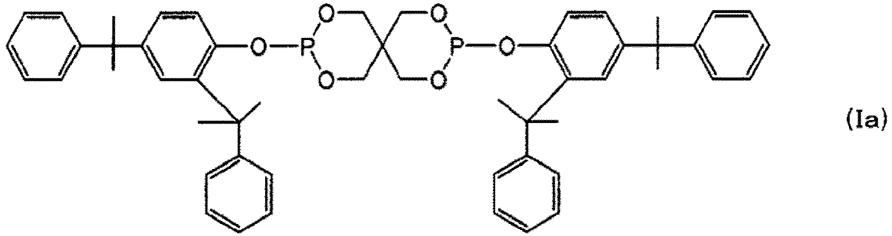

5. The aromatic polycarbonate resin composition according to any one of Claims 1 to 4, wherein the YI value is not more than 20 when measured through 300 mm length with respect to a 300 mm long optical path article obtained by injection molding the aromatic polycarbonate resin composition.

6. A molded article obtained by molding the aromatic polycarbonate resin composition according to any one of Claims 1 to 5.

7. The molded article according to Claim 6, wherein the article is a light guide member.

8. The molded article according to Claim 7, wherein the article is a light guide member included in an automobile lighting device.

## Patentansprüche

1. Aromatische Polycarbonatharzzusammensetzung, umfassend:
ein aromatisches Polycarbonatharz (A),
0,01 bis 0,1 Masseteile eines Phosphitstabilisators (B-I), bezogen auf 100 Masseteile des aromatischen Polycarbonatharzes (A), wobei der Phosphitstabilisator (B-I) durch die nachstehende allgemeine Formel (I) dargestellt ist,
0,01 bis 0,5 Masseteile eines Phosphitstabilisators (B-II), bezogen auf 100 Masseteile des Polycarbonatharzes (A), wobei der Phosphitstabilisator (B-II) durch die nachstehende Formel (II) dargestellt ist,
0,05 bis 2 Masseteile einer Polyalkylenglykolverbindung (C), bezogen auf 100 Masseteile des aromatischen Polycarbonatharzes (A), wobei die Polyalkylenglykolverbindung (C) durch die nachstehende allgemeine Formel (III-1) dargestellt ist, und
**dadurch gekennzeichnet, dass** das Phosphitstabilisator (B-II)/Phosphitstabilisator (B-I)-Masseverhältnis 1 bis 10, vorzugsweise 1,5 bis 8, beträgt: 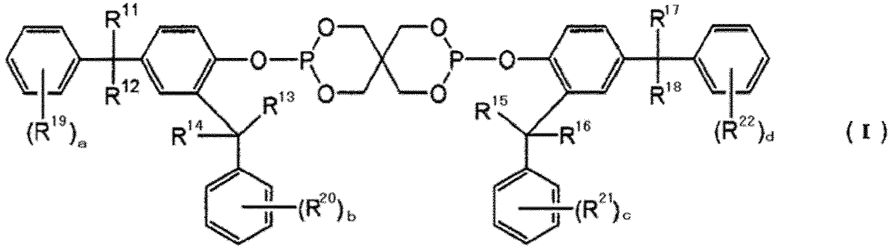 wobei in der Formel (I) R¹¹ bis R¹⁸ jeweils unabhängig ein Wasserstoffatom oder eine Alkylgruppe sind, R¹⁹ bis R²² jeweils unabhängig eine Alkylgruppe, eine Arylgruppe oder eine Aralkylgruppe sind und a bis d jeweils unabhängig eine ganze Zahl von 0 bis 3 sind, 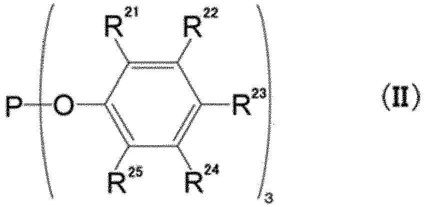 wobei in der Formel (II) R²¹ bis R²⁵ jeweils unabhängig ein Wasserstoffatom, eine Arylgruppe mit 6 bis 20 Kohlenstoffatomen oder eine Alkylgruppe mit 1 bis 20 Kohlenstoffatomen sind, 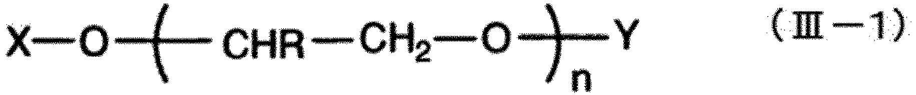 wobei in der Formel (III-1) R eine Alkylgruppe mit 1 bis 3 Kohlenstoffatomen ist, X und Y jeweils unabhängig ein Wasserstoffatom, eine aliphatische Acylgruppe mit 1 bis 23 Kohlenstoffatomen oder eine Alkylgruppe mit 1 bis 23 Kohlenstoffatomen sind und n eine ganze Zahl von 10 bis 400 ist.

2. Aromatische Polycarbonatharzzusammensetzung gemäß Anspruch 1, ferner umfassend eine Epoxyverbindung (D) in einer Menge von 0,0005 bis 0,2 Masseteile, bezogen auf 100 Masseteile des aromatischen Polycarbonatharzes (A).

3. Aromatische Polycarbonatharzzusammensetzung gemäß Anspruch 1 oder 2, wobei die Polyalkylenglykolverbindung (C) Polybutylenglykol ist.

4. Aromatische Polycarbonatharzzusammensetzung gemäß irgendeinem der Ansprüche 1 bis 3, wobei der Phosphitstabilisator (B-I) eine durch die folgende Strukturformel (Ia) dargestellte Verbindung ist:

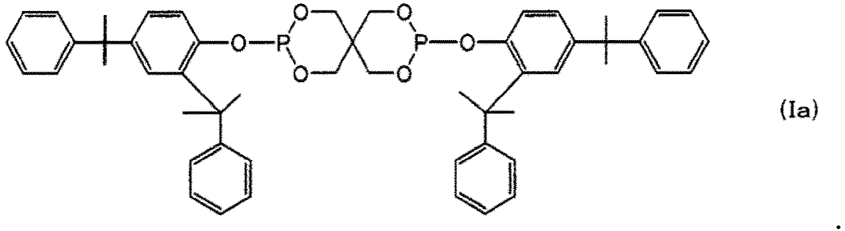

5. Aromatische Polycarbonatharzzusammensetzung gemäß irgendeinem der Ansprüche 1 bis 4, wobei der YI-Wert nicht größer als 20 ist, wenn er über eine Länge von 300 mm in Bezug auf einen Gegenstand mit einem 300 mm langen optischen Weg, der durch Spritzgießen der aromatischen Polycarbonatharzzusammensetzung erhalten wird, gemessen wird.

6. Geformter Gegenstand, erhalten durch Formen der aromatischen Polycarbonatharzzusammensetzung gemäß irgendeinem der Ansprüche 1 bis 5.

7. Geformter Gegenstand gemäß Anspruch 6, wobei der Gegenstand ein Lichtleiterelement ist.

8. Geformter Gegenstand gemäß Anspruch 7, wobei der Gegenstand ein Lichtleiterelement ist, das in einer Fahrzeugbeleuchtungsvorrichtung enthalten ist.

## Revendications

1. Composition de résine de polycarbonate aromatique comprenant :
une résine de polycarbonate aromatique (A) ;
0,01 à 0,1 partie en masse d'un stabilisateur de phosphite (B-I) par rapport à 100 parties en masse de la résine de polycarbonate aromatique (A), le stabilisateur de phosphite (B-I) étant représenté par la formule générale (I) ci-dessous ;
0,01 à 0,5 partie en masse d'un stabilisateur de phosphite (B-II) par rapport à 100 parties en masse de la résine de polycarbonate aromatique (A), le stabilisateur de phosphite (B-II) étant représenté par la formule générale (II) ci-dessous ;
0,05 à 2 parties en masse d'un composé polyalkylène glycol (C) par rapport à 100 parties en masse de la résine de polycarbonate aromatique (A), le composé polyalkylène glycol (C) étant représenté par la formule générale (III-1) ci-dessous ; et
**caractérisé en ce que** le rapport massique stabilisateur phosphite (B-II)/stabilisateur phosphite (B-I) est de 1 à 10, de préférence de 1,5 à 8 : 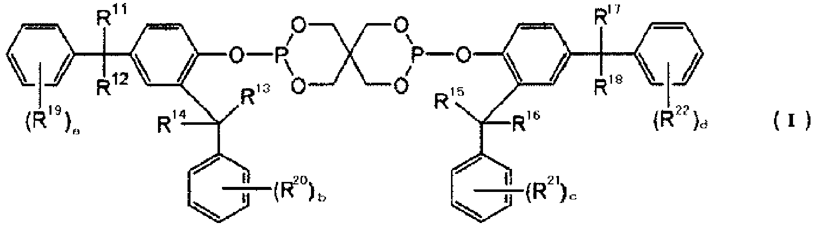 dans laquelle dans la formule (I), R¹¹ à R¹⁸ sont chacun indépendamment un atome d'hydrogène ou un groupe alkyle, R¹⁹ à R²² sont chacun indépendamment un groupe alkyle, un groupe aryle ou un groupe aralkyle, et a à d sont chacun indépendamment un nombre entier de 0 à 3 ; 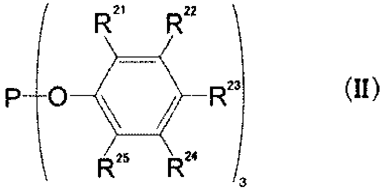 dans laquelle dans la formule (II), R²¹ à R²⁵ sont chacun indépendamment un atome d'hydrogène, un groupe aryle présentant 6 à 20 atomes de carbone ou un groupe alkyle présentant 1 à 20 atomes de carbone ; 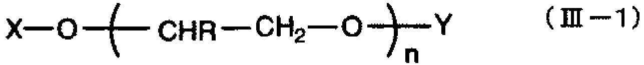 dans laquelle dans la formule (III-1), R est un groupe alkyle présentant 1 à 3 atomes de carbone, X et Y sont chacun indépendamment un atome d'hydrogène, un groupe acyle aliphatique présentant 1 à 23 atomes de carbone ou un groupe alkyle présentant 1 à 23 atomes de carbone, et n est un nombre entier de 10 à 400.

2. Composition de résine de polycarbonate aromatique selon la revendication 1, comprenant en outre un composé époxy (D) à raison de 0,0005 à 0,2 partie en masse par rapport à 100 parties en masse de la résine de polycarbonate aromatique (A).

3. Composition de résine de polycarbonate aromatique selon la revendication 1 ou 2, dans laquelle le composé polyalkylène glycol (C) est le polybutylène glycol.

4. Composition de résine de polycarbonate aromatique selon l'une quelconque des revendications 1 à 3, dans laquelle le stabilisateur de phosphite (B-I) est un composé représenté par la formule structurelle suivante (la) :

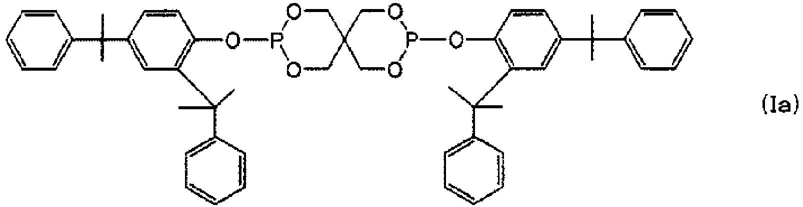

5. Composition de résine de polycarbonate aromatique selon l'une quelconque des revendications 1 à 4, dans laquelle la valeur YI n'est pas supérieure à 20 lorsqu'elle est mesurée sur une longueur de 300 mm par rapport à un article à trajet optique de 300 mm de long obtenu par moulage par injection de la composition de résine de polycarbonate aromatique.

6. Article moulé obtenu par moulage de la composition de résine de polycarbonate aromatique selon l'une quelconque des revendications 1 à 5.

7. Article moulé selon la revendication 6, dans lequel l'article est un élément de guidage de la lumière.

8. Article moulé selon la revendication 7, dans lequel l'article est un élément de guidage de lumière inclus dans un dispositif d'éclairage automobile.
